(19) Europäisches Patentamt European Patent Office Office européen des brevets

(11) **EP 1 668 566 B1**

(12) **EUROPEAN PATENT SPECIFICATION**

(45) Date of publication and mention of the grant of the patent:
**12.11.2008 Bulletin 2008/46**

(21) Application number: **04783502.0**

(22) Date of filing: **08.09.2004**

(51) Int Cl.:
*G06K 9/22* (2006.01)    *G06F 3/033* (2006.01)

(86) International application number:
**PCT/US2004/029274**

(87) International publication number:
**WO 2005/034023 (14.04.2005 Gazette 2005/15)**

(54) **SPATIAL CHIROGRAPHIC SIGN READER**

RÄUMLICHER CHIROGRAPHISCHER SCHILDLESER

LECTEUR DE SIGNES CHIROGRAPHIQUES EN 3 D

(84) Designated Contracting States:
**AT BE BG CH CY CZ DE DK EE ES FI FR GB GR HU IE IT LI LU MC NL PL PT RO SE SI SK TR**

(30) Priority: **26.09.2003 US 672647**
**14.11.2003 US 520169 P**
**06.02.2004 US 542309 P**
**12.03.2004 US 552800 P**

(43) Date of publication of application:
**14.06.2006 Bulletin 2006/24**

(73) Proprietor: **Khomo, Malome T.**
**Berea 4001, Durban (ZA)**

(72) Inventor: **Khomo, Malome T.**
**Berea 4001, Durban (ZA)**

(74) Representative: **McLeish, Nicholas Alistair**
**Maxwell et al**
**Boult Wade Tennant**
**Verulam Gardens**
**70 Gray's Inn Road**
**London WC1X 8BT (GB)**

(56) References cited:
WO-A-95/21436          WO-A-99/26191
WO-A-20/04029866     US-A- 5 576 727
US-A- 6 081 261          US-A1- 2003 179 201
US-B1- 6 229 102

## Description

## BACKGROUND OF THE INVENTION

Handwriting is traditionally performed on a writing surface, such as paper, with an ink-dispensing pen or other writing instrument, such as a pencil, or paint brush. The result is expected to be understandable by human readers.

Recently, electronic handwriting has been done on planar X-Y digitizing pads using a stylus employed to simulate handwriting upon the pad to create an electronic facsimile of handwriting. The digitizing system collects an array of X-Y coordinates of pixels corresponding to the curve tracing positional points of the stylus tip. Usually the X-Y arrays are gathered and stored as positional arrays, and are made discernible to a human reader when rendered on an X-Y display, but are rarely discernible as text by a device.

Attempts to make handwriting discernible as machine-readable text have concentrated on handwriting recognition of the X-Y traces by translation into binary coded text after affine transformation of the X-Y trace. Other techniques of recognition of the X-Y traces employ stochastic recognition based on various randomness assumptions using a statistical model. Other attempts with more deterministic techniques of recognition of the X-Y traces use velocity profiling in on-line recognition and forward search in batch recognition. Many similar X-Y trace recognition efforts have resulted in numerically intense algorithms which tend to restrict the recognition process to off-line batch processing, conducted as a separate procedure long after the writing has been done.

More recently, on-line recognition systems have dispensed with natural hand-writing and created specialized pen-stroke shorthand for letters of the Latin alphabet and Arabic numerals and punctuation marks, such as an electronic stylus recognition system. Field experience has shown that recognition error rates are high enough to cause manufacturers to begin supplanting the system with keypads and software keyboards. Miniaturized keypads are slow when compared to normal handwriting speed. Full-sized keyboards, although faster in use than miniature keyboards, are too cumbersome for optimum purposes.

Devices that track X-Y motion in true geometry exist in the form of analog joysticks. These are used as actuators for simulation and as gaming input devices, where a hand-held game controller may incorporate an analog joystick that permits tracking of directional inputs over 360 degrees around an action reference point, and is small enough to be manipulated by a finger tip. The cited range of 360 degrees signifies that the joystick spans a projection of the X-Y plane, but does not span a radial distance, i.e. , the joystick is not operable to span a projection along the Z-axis. This is because the range of each joystick sensor is less than the radial range needed to be spanned.

The cited joystick may utilize optical quadrature sensor wheels over two orthogonal axes of rotation. Such a configuration may suffice for directional control over a planar range, but is inadequate for the capture of natural handwriting strokes because the latter requires a depth sensor.

Further limitations and disadvantages of conventional and traditional approaches will become apparent to one of skill in the art through comparison of such systems with embodiments presented in the remainder of the present application with reference to the drawings.

For reference, the following documents describe prior art systems of background relevance to the present invention. WO 95/21436 describes an information input apparatus. WO 99/26191 describes an apparatus and method which measure, in real time, the movements of an implement attached to one end of the apparatus. US 5,576,727 describes a method and apparatus for use with a computer for providing commands to a computer through tracked manual gestures and for providing feedback to the user through forces applied to the interface. US 2003/179201 describes a pen-based computing system which supports organising, editing and rendering handwritten digital ink. US 6,229,102 describes a pen-shaped handwriting input apparatus using accelerometers and gyroscopes and an associated operational device for determining pen movement. US 6,081,261 describes a manual entry interactive paper and electronic document handling and process system which uses a pen-like instrument with a writing point for making written entries upon a physical document and sensing the three-dimensional forces exerted on the writing tip as well as the motion associated with the act of writing. Finally, WO 2004/029866 provides a 3D handwriting recognition system that allows users to freely write words or characters in a 3D space in a touchless manner, without requiring any physical medium such as a pad or a table.

## SUMMARY OF THE INVENTION

Aspects of the present invention may be found in a method for spatially reading handwritten symbols. The method may comprise defining a spatial three dimensional volume, deploying a writing tip within the spatial three dimensional volume, writing a handwritten symbol with the writing tip, measuring positions of the writing tip within the volume as the handwritten symbols are being executed, measuring motions of the writing tip within the volume as the handwritten symbols are executed, and identifying two dimensional handwritten symbols from the measured three dimensional positions and motions of the writing tip.

In another embodiment of the present invention, the method comprises defining a plane corresponding to an X-Y plane, locating an origin in space proximate the plane, defining a Z-axis orthogonal to the X-Y plane, and applying a coordinate system to define all points relative to one of the origin, the X-Y plane, the Z-axis, and angular relations corresponding to a position of the writing tip.

In another embodiment of the present invention, the method comprises applying one of Cartesian coordinates, spherical coordinates, and cylindrical coordinates to the spatial three dimensional volume.

In another embodiment of the present invention, the method comprises inserting a writing stylus into a receptacle in a bracket mounted on a boom in a handwritten symbol reader.

In another embodiment of the present invention, the method comprises a user grasping a writing stylus and performing a writing upon a writing area within a handwritten symbol reader.

In another embodiment of the present invention, the method comprises measuring changes in an electrical component over time as the writing tip is moved from position to position during a writing.

In another embodiment of the present invention, the method comprises measuring changes in an electrical component over time as the writing tip moves about with respect to a fixed position in space.

In another embodiment of the present invention, the method comprises measuring one of voltage, current, resistance, inductance, and impedance in real time.

In another embodiment of the present invention, the method comprises measuring changes in an electrical component over time as the writing tip translates from position to position three-dimensionally during a handwriting.

In another embodiment of the present invention, the method comprises measuring changes in an electrical component over time as the writing tip traverses a three-dimensional path of motion with respect to a fixed position in space.

In another embodiment of the present invention, the method comprises measuring electronically one of voltage, current, resistance, inductance, and impedance in real time.

In another embodiment of the present invention, the method comprises determining measurement coordinates relative to a reader fulcrum pivot in position and an associated time coordinates.

In another embodiment of the present invention, the method comprises identifying two dimensional handwritten symbols from the measured three dimensional positions and motions of the writing tip. Identifying further comprises aligning an X-Y plane adjacent a writing portion of a writing platform, aligning a Z-axis with a ray pointing outward perpendicularly from the writing platform, defining the origin to be away from the writing platform, and projecting the three dimensional position and motions onto a two dimensional plane.

In another embodiment of the present invention, the method comprises identifying two dimensional handwritten symbols from the measured three dimensional positions and motions of the writing tip. Identifying further comprising measuring motion over time along at least two orthogonal axes of rotation and along a radial distance, applying a first rotary measurement to span rotation in a projection plane over the flat surface of the platform, applying a second rotary measurement to span an angular elevation from the projection plane, and applying a third radial measurement of linear distance from a reader fulcrum pivot along the elevation.

A device according to an embodiment of the present invention comprises a device for spatially reading handwritten symbols. The device comprising a platform having a flat surface, a spatial tracking assembly may be positioned adjacent to and may be rotatably engaging a planar writing area selected from the flat surface of the platform. The spatial tracking assembly may be configured to slidably accept a writing stylus and to rotate with the stylus about an axis parallel to the flat surface. A stylus tip of the writing stylus may be adapted to trace a three dimensional path in a volume above the flat surface of the platform.

In another embodiment of the present invention, the spatial tracking assembly may comprise a boom, an assembly support pinion providing rotatably engagement with the flat surface of the platform, a fulcrum housing having a fulcrum bracket connected to the assembly support pinion, a fulcrum pinion rotatably engaging the fulcrum housing orthogonally to the assembly support pinion, and a securing means for rotatably securing the spatial tracking assembly to the flat surface of the platform. The securing means may comprise a restricting flange on one end of the assembly support pinion, a locking feature on another end of the assembly support pinion, and a locking member mating with the locking feature to lock the assembly support pinion in the platform. The spatial tracking assembly may be adapted to rotate at least two dimensionally with respect to the flat surface of the platform.

In another embodiment of the present invention, the boom may comprise at least one elongated boom stem attached to the fulcrum pinion at one end of the at least one boom stem, a tracking bracket slidably attached to the at least one boom stem, and an opening on the tracking bracket. The opening may serve as a receptacle for engaging the boom with the writing stylus. Three dimensional movement of the stylus tip may be translated through movement of the tracking bracket along the at least one boom stem into a two dimensional representation of a symbol.

In another embodiment of the present invention, the tracking bracket may comprise a reference tracking point fixed relative to the stylus receptacle, a reference position of the tracking bracket along the boom, and a reference position of the boom. The tracking point may lie within the writing volume and reference positions may be used to define a three dimensional coordinate space in which the stylus tip may move.

In another embodiment of the present invention, the tracking point may comprise a measurement means for measuring a time component, and a measurement means for measuring a position measurement. The position measurement may comprise measurement of a linear position along the boom and measurement of an angular position. The measurement of an angular position may comprise an angular position rendered by an angular position of the fulcrum pinion, and an angular position rendered by an angular position of the assembly support pinion. Measurements may be used to determine a dynamic state variable of the stylus tip.

In another embodiment of the present invention, the position measurement may be collected as tracking data. The tracking data may comprise output of a linear position sensor of the sliding bracket along the at least one boom stem, output of an angular position sensor of the boom around the fulcrum, and output of an angular position sensor of the reader assembly around the platform housing. Tracking data may be used to determine a dynamic state variable of the stylus tip.

In another embodiment of the present invention, the tracking data may comprise a set of measurement position and time coordinate readings. Measurement coordinates may be transformed into a spatially equivalent set of Cartesian coordinates. A conversion to font-centric coordinates may comprise a conical projection of the Cartesian coordinates onto the writing area and a restriction of the conical projection. The restriction may produce an image upon the writing area that is true to an image or a writing upon a traditional writing medium, and an identification of the restriction with a projection pre-image in writing volume of a true writing image. Three dimensional writing motions formed within the writing volume may be identified and interpreted as two dimensional handwritten symbols in real time.

In summary, a first aspect of the present invention provides a method for spatially reading the handwriting of an arbitrary symbol in a font-centric coordinate system in accordance with claim 1. A second aspect of the present invention provides a device arranged to spatially read the handwriting of an arbitrary symbol in a font-centric coordinate system according to the method of the first aspect, the device being in accordance with claim 6. These and other advantages and novel features of the present invention, as well as details of an illustrated embodiment thereof, will be more fully understood from the following description and drawings.

BRIEF DESCRIPTION OF SEVERAL VIEWS OF THE DRAWINGS

Fig.1 illustrates a perspective view of a writing stylus illustrating the writing of small Latin letter 'a 'over a writing surface within a font coordinate frame according to an embodiment of the present invention;

Fig. 2 illustrates an exploded view of the font face illustrating projection of the stylus trace of the small letter'a'upon the X-Y plane according to an embodiment of the present invention;

Fig. 3 illustrates a top perspective view of the chirographic reader illustrating the writing of the small letter 'a 'according to an embodiment of the present invention; and

Fig. 4 illustrates a bottom exploded view of fulcrum undercarriage features that are obscured in Fig. 3 according to an embodiment of the present invention.

DETAILED DESCRIPTION OF THE INVENTION

The present invention relates to spatial tracking of handwriting for interpretation of handwriting motion using three-dimensional position sensors to identify two-dimensional signs, symbols, or glyphs made by a writing stylus in real time.

The present invention enhances an analog X-Y joystick providing the joystick with the ability to a track radial depth, i.e., along the Z axis, and capture true spatial geometry for use in capturing handwritten symbols and for use in symbol recognition in real time.

The present invention makes the foregoing objectives possible by considering an assumed X-Y typeface to be in a projection plane for a font-centric coordinate system under which symbols may be more easily discernible than in a general X-Y pixel coordinate system. The present coordinate system spans a three-dimensional volume with a font-specific origin located at a depth below the X-Y typeface plane and may be captured by employing a reading device that can additionally track the depth of pen strokes so that information can be used to identify where an intended glyph begins and ends, thereby facilitating identification of a particular glyph or symbol in real time. The addition of such invisible information may greatly improve the speed and accuracy of symbol recognition.

The present invention makes the foregoing objectives possible by providing a miniaturized electronic input device that approaches keyboard reliability and supports machine readable input at handwriting speed in freehand script. The present invention also provides an input mechanism supporting symbol encoding, wherein symbol recognition is not computationally expensive. In order to support miniaturization, the present invention provides a recording device that dispenses with the multiple electronic keys found in keyboards and keypads by replacing them with a universal reader of handwritten symbols in real time.

The present invention may provide an elongated pointing device to track a writing stylus tip by pointing toward it in planar directions from an origin suggested by a pivot point, thus providing true geometric distance measurement. The present invention may also provide for tracking radial motion of the stylus tip along a direction pointed to, (i.e., the ray), so that true Cartesian distance in the plane may be tracked.

The present invention may provide spatial tracking in a two-dimensional true geometric tracker by applying a two dimensional tracker twice. The present invention may apply the two-dimensional tracker initially to span a plane, for example, the X-Y plane. Then, by aligning the tracker's axis of rotation with the Z-axis, achieve true spatial tracking in the X-Y-Z spatial volume. The present invention may apply the same tracker a second time by configuring the axis of rotation of the second application to coincide with the ray of the first application, and aligning the two, so that the axes of rotation intersect at a point. Mounting the second two-dimensional tracker upon the first two-dimensional tracker in this fashion makes the two rotary axes orthogonal, ensuring that together they will span a three-dimensional volume.

The mounting arrangement may also make the two ray distance measurements coincident, dispensing with the need for a second radial measurement, while achieving true spatial tracking with only three measurements. To ensure that a three-dimensional volume is spanned, a restriction is made on the writing volume to the range limit imposed by each sensor. The present device may not necessarily span a 360 degree angular range, but rather may be limited to a quadrant in each angular dimension, as determined by the specific application.

The first measurement point may be the angle of rotation of the device within the X-Y plane, which may be measured as a polar coordinate angle theta ($\theta$) relative to the X-axis as ray origin and captured directly by rotational quadrature readings in the X-Y plane. A second reading from the device may be made from another quadrature device for capturing rotations that are orthogonal to the X-Y plane of rotation, and may be spherical coordinate angle phi ($\varphi$), and may be defined to coincide with a Z-axis latitude angle of inclination with X-Y equatorial plane as ray origin. A third reading may be of the radial distance rho ($\rho$), and may be captured by a linear quadrature along the length of the pointing device ray, with the compound pivot-point as origin.

The captured data points of the compound spatial joystick may form spherical coordinates, and a transformation of the measurement coordinates to Cartesian font coordinates may be provided to facilitate device use as a chirographic symbol reader. Alternatively, cylindrical coordinates may also be applied to designated points in a given spatial three dimensional volume.

In the following detailed descriptions of the drawing figures, spatially orienting terms are used, such as "left", "right", "vertical", "horizontal", "upper", "lower", etc. It is to be understood that these terms are used for convenience of description of the preferred embodiments by reference to the drawings. These terms do not necessarily describe the absolute location or orientation in space, such as left, right, upward, downward, etc., that any part may assume.

Additionally, in the following detailed description, dynamic state variables are described. Dynamic state variables may comprise at least velocity and acceleration, and further may comprise linear, angular and radial dynamic states, for example, position as a function of time and motion as a function of time in any desired coordinate reference frame.

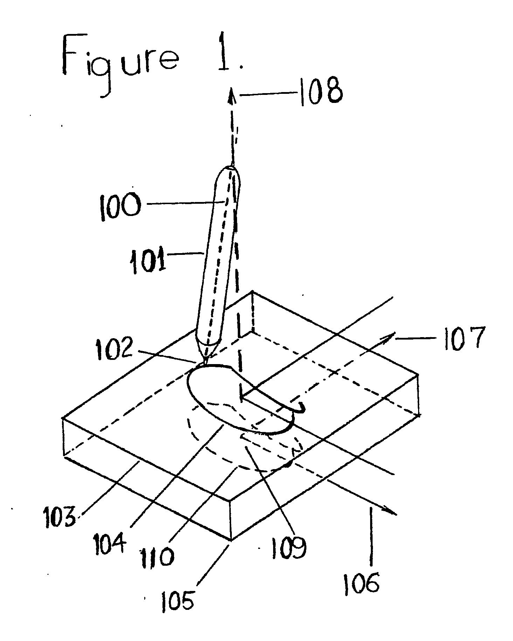

Fig. 1 illustrates a top perspective view of a writing instrument 101, in contact with a writing surface 103, and positioned along an imaginary line 100 above the writing surface 103. In Fig. 1, the writing instrument 101 may comprise a stylus elongate member with a writing tip 102 at the lower extremity of the stylus. The writing surface 103 is shown suitably magnified in Fig. 1 to emphasize depth above and below the actual writing 104, which is illustrated here with the sample lettering of the Latin cursive small letter 'a', for example, but may be any handwritten symbol. The writing 104, may be contained within a handwriting font face which may be defined to be the rectangular frame 105, containing an image 110, of the writing 104, projected below the surface 103.

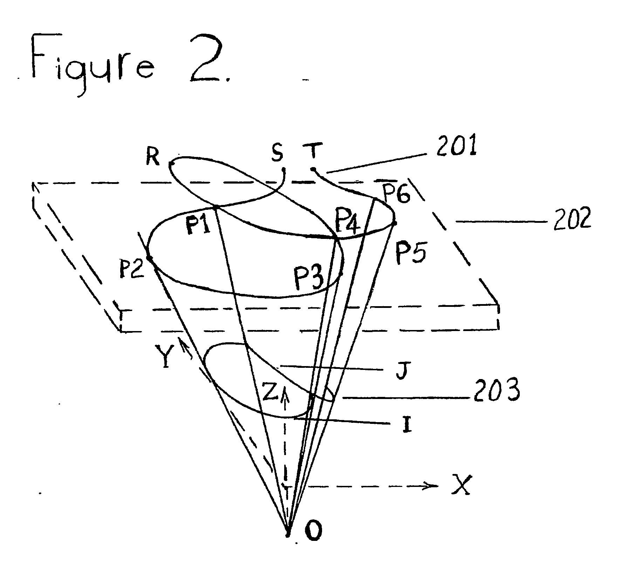

The typeface frame 105 may also define a Cartesian X-Y coordinate system, for example, with Y-axis 106, and X-axis 107 at the center, together with a projection from an origin below the projection plane, forming the font coordinates. The writing surface 103 in Fig. 1 is shown in the horizontal X-Y plane and the depth of the writing tip 102 above and below the writing surface 103 may be measured in a direction along the Z-axis 108. The origin of the illustrated font coordinate system is shown in Fig. 1 located at point 109, at the intersection of the three axes 106, 107 and 108, below the writing surface 103. The font face 105 is depicted in more detail in Fig. 2 below.

Figure 2 illustrates an exploded view of the font face 202. Fig. 2 introduces many invisible coordinate reference elements (points and lines) that are labeled alphabetically below, leaving the labeling of the other elements numerical. Fig. 2 illustrates at the top of the diagram a writing path 201 of the writing instrument tip over the font face 202.

The writing path 201 begins at starting point S, and sequentially traverses the points on the path marked with dots and labeled P1, P2, P3, P4, R, P5, P6, and T. Points R, S, and T of the path may lie above the font face 202, whereas points P1 to P6 inclusive may lie within the font face 202.

The writing path 201 is shown projected, conically for example, onto projected image 203, of the sample letter 'a' in a horizontal plane. The projection is not limited to being conical and alternatively may be cylindrical, spherical, or some of other shape. By convention, the projection plane lies at the bottom of the font face 202. The image's coordinate axes are on two invisible lines marked in Fig. 2 by dashed lines with arrowheads labeled X and Y, respectively. The projection is shown in the X-Y reference plane, by convention, and marks the bottom of the font face 202.

In order to support the projection described herein, the origin O of the font-centric coordinates is placed at unit standard depth below the writing surface to act as the projection apex. The origin O lies below the font face 202, by convention. The ray projecting from origin O to the center of the X-Y frame follows the Z-axis, which is a line shown in Fig. 2 by the dashed line with arrowhead labeled Z.

The projected image 203 appears in Fig. 2 as two continuous arcs I and J, corresponding to the paths P1-P2-P3-P4 and P1-P4-P5-P6, respectively, the arcs crossing each other at intersection points P1 and P4. An invisible straight line drawn connecting path points P1 and P4 may lie in the plane of the font face 202.

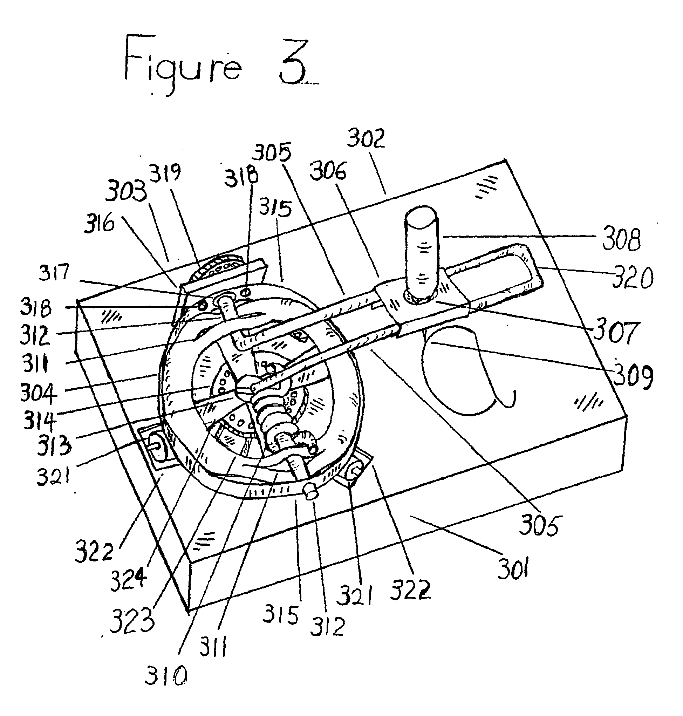

Fig. 3 illustrates a perspective view of the chirographic reader illustrating the writing of small letter 'a', for example, in a writing area 302 of the base platform 301. In an embodiment of the present invention, the writing area 302 may be offset from the fulcrum support area 303 of the base platform 301. The fulcrum support platform, which rests in the generally horizontal direction, may have a vertical opening (not visible in the figure) that receives the vertical major pinion 313 of the fulcrum so that the fulcrum can swivel around horizontally. The bottom of the major pinion 313 may accommodate a locking pin in a groove around the pinion circumference to lock the fulcrum to the support base after the vertical pinion has been inserted fully into the supporting platform base.

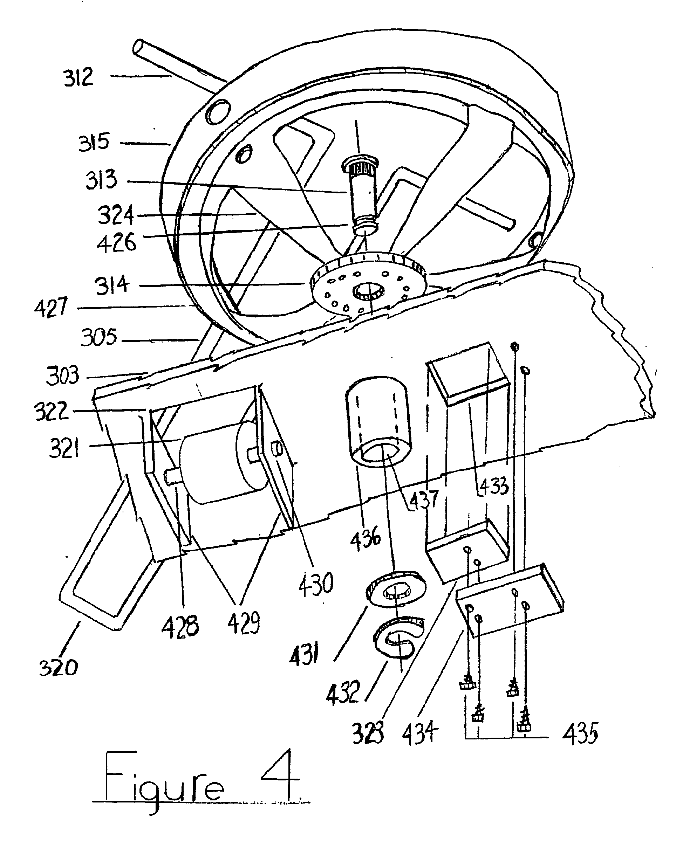

A quadrature wheel 314 may be firmly attached at the top of the vertical pinion 313. The support platform may have a quadrature sensor 323 mounted flush with the platform surface as shown in Fig. 3 partly obscured by the quadrature wheel when the major pinion 313 is fully inserted in the platform housing. The major pinion 313 may be locked in place with a locking pin to position the quadrature wheel 314 close to the sensor 323. This is illustrated separately below in Fig. 4.

Four extensions 324 of the fulcrum bracket (only the foreground one is marked) may bend down and inward into the housing for the major pinion 313. The extensions may be adapted to fit into the housing like a sleeve between the housing body and the major pinion 313.

A boom 320 may extend the reach of the reader from the fulcrum into the writing area 302 by elongated stems 305. The support area 302 may accommodate a circular fulcrum bracket 304 having openings 311, for supporting minor pinions 312 of the reader boom stems 305. Firmly attached to the fulcrum bracket 304 may be a support collar 315 for quadrature sensor 316. The collar 315 may also rest on three horizontal stabilization rollers 321, two of which are shown in the foreground of Fig. 3. The rollers 321 may be rotatably attached to the fulcrum support base in roller housing wells 322.

The boom 320 may extend over the base platform along a linear offset from the support area into the writing area 302. The free end of the boom 320 may accommodate a bracket 306 that mates with boom stem 305 to allow the bracket 306 to slide along the boom stem 305. The bracket 306 may have a hollow receptacle 307 at the center, into which writing tip 309 of stylus 308 may be lodged to engage the chirographic reader. The stylus 308 may engage the reader by insertion of stylus tip 309 through the top side of the receptacle towards writing surface 302, as shown in Fig. 3.

Motion of the stylus tip in the boom's radial direction may be accommodated by sliding the receptacle along the boom stems 305. In an embodiment of the present invention, the position of the receptacle along the boom 320 may be derived electrically or electronically, to avoid angular inertia associated with the quadrature wheels, in real time. The position as a function of time is a measurable dynamic state variable, for example, velocity, which may be calculated. Additionally, a further dynamic state variable may be calculated, for example, acceleration, i.e., velocity as a function of time. The dynamic state variables may be calculated, manipulated, and/or described in any desired coordinate system or frame of reference.

In an embodiment of the present invention, the boom stem 305 may be made of a resistive material and the bracket 306 may be made of a conductive material so that sliding contact between the bracket 306 and the boom stem 305 may create an electrical shunt to alter an overall electrical resistance according to the bracket position along the boom 320 at a particular moment in time. The resistance may be measured at the pinion 312 sections of the boom 320. A sensor current may be applied across pinions 312 to enable measurement of the radial motion rho ($\rho$) along the boom 320. The contact point 311 may be fitted with an adhesive one-sided strip conductor that leads via bracket extensions 324 to the underside of the platform 301. The underside of the platform may house batteries to power the circuit. The electrical circuitry and batteries are not shown in the figures.

Although resistance measurement has been disclosed by way of example, the present invention is not limited to resistance measurement but also contemplates measuring changes in an electrical component by measuring one of voltage, current, resistance, inductance, impedance, etc. in real time or alternatively electronically, via solid state microchip measurement embodiments.

The boom 320 may be loaded with a spring 310 to enable the boom 320 to rest in the raised position when the stylus is retracted. One end of the spring may lock onto one of the boom stems 305 and apply spring torque to keep the unloaded boom raised. One end of the spring may coil around one of the minor pinions 312 of the boom 320. Another end of the spring may anchor the boom against the fulcrum bracket 304.

Another minor pinion 312 may extend through fulcrum bracket opening 311, opening 317 of support collar 315, and finally through an opening (not shown) in quadrature sensor 316, where the pinion end may be firmly attached to quadrature wheel 319. The pinion 312 may rotate freely through the openings and the quadrature wheel 319 may also rotate in close proximity to quadrature sensor 316 to effect rotary readings about the minor pinion 312 measured angle phi ($\varphi$) in real time. Electrical circuitry associated with the quadrature sensors is not shown in the figures.

Fig. 4 illustrates a bottom perspective view of the fulcrum undercarriage exposing features that are obscured in the top perspective view of Fig. 3. In Fig. 4, the element numbering system of Figs. 3 and 4 are commingled to promote unique part identification. For example, platform member 303, also shown in Fig. 3, is shown here with identical designation 303, (instead of 403), and is largely cut away to expose the upper carriage elements identified in Fig. 3. Therefore, features appearing in Fig. 4 that have already been identified in Fig. 3 are designated with the same numerical label as was used in Fig. 3, and features that are revealed for the first time in Fig. 4 are designated by new numerical labels distinct from those already assigned in Fig. 3. The newly identified items therefore begin at numeral 426, assigned to groove 426, disposed at the lower end of the major pinion 313. The underside of support collar 315 exposes the running surface 427 which makes contact with roller wheel 321, when fully assembled. The roller wheel 321 floats in the housing well 322 and may be rotatably attached with axle 428 through opening 430 on opposing flanges 429.

The pinion 313 may fit through opening 437 and may be kept true to the vertical axis by guide 436. The pinion 313 may be inserted through the friction abating washer 431 and be locked in place with pin 432. An opening 433 in the support platform 303 may accommodate quadrature sensor 323. The quadrature sensor 323 may be firmly attached to the platform 303 with the use of supporting flange 434 and screwed onto the platform 303 with screws 435. Once firmly attached, the reading side of the sensor 323 may be in close proximity to quadrature wheel 314 enabling the measurement of the angle of swivel theta ($\theta$).

Font Coordinate System of an Embodiment of the Present Invention

A font coordinate system may be a Cartesian system, for example, which may be configured so that the X-Y plane coincides with the writing portion of the support platform, and the Z-axis coincides with the projective ray pointing outwards at the middle of the font face, and with the origin O below the writing surface. While the origin O has been shown defined below the writing surface the origin O may also be above or aligned with the writing surface in other embodiments.

The measurement coordinates, when relative to the reader fulcrum pivot, may coincide with spherical coordinates such that the measured angle phi ($\varphi$) may correspond to the angle of latitude, measured angle theta ($\theta$) may correspond to a polar coordinate relative to the X-axis, and measured angle rho($\rho$) may correspond to a radial translation as follows:

$$x_m = \rho\cos(\varphi)\cos(\theta);$$

$$y_m = \rho\cos(\varphi)\sin(\theta);$$

and

$$z_m = \rho\sin(\varphi).$$

The font coordinates may also be derived from the measurement coordinates as follows.
A reader having a base platform of unit thickness (in the Z-direction), width 4w (in the X-direction), and the font face being a square of side 2w. The distance between the reader fulcrum Z-axis and the font face Z-axis may be 2w.

$$x = x_m - 2w$$

The font origin may be at unit distance below the platform surface.

$$z = z_m - 1$$

The font face and measurement coordinates share coincident X-axes.

$$y = y_m$$

The reader receptacle may have the following range: The minimal range over the writing surface the radial distance may be 2w. The maximal distance over the writing surface may be the hypotenuse ($\sqrt{10}$)w.

While the invention has been described with reference to certain embodiments, it will be understood by those skilled in the art that various changes may be made and equivalents may be substituted without departing from the scope of the invention. In addition, many modifications may be made to adapt a particular situation or material to the teachings of the invention without departing from its scope. Therefore, it is intended that the invention not be limited to the particular embodiment(s) disclosed, but that the invention will include all embodiments falling within the scope of the appended claims.

**Claims**

1. A method for spatially reading the hand-writing of an arbitrary symbol in a font-centric coordinate system, the method comprising the steps of:

defining a distinct three-dimensional writing volume associated with a distinct stationary origin (109, O) of a font-centric measurement coordinate system;

enabling passive measurement of true position of a writing tip (102, 309) in the three-dimensional writing volume;

deploying a writing tip (102, 309) within the three-dimensional writing volume, the deployment comprising inserting a writing stylus (101, 308) having the writing tip (102, 309) into a receptacle (307) in a bracket (306) mounted on a boom (320) in a handwritten symbol reader;

tracing the arbitrary symbol with the writing tip (102, 309) by a user grasping a writing stylus (101, 308) having the writing tip (102, 309) and performing a writing upon a writing area (302) of the handwritten symbol reader;

measuring three-dimensional font-centric positions and motions (201) of the writing tip (102, 309) as the arbitrary symbol is being executed; and

identifying two-dimensional symbols by forming, in said coordinate system, a two dimensional projected image (203) of the measured three-dimensional font-centric positions and motions (201) of the writing tip (102, 309).

2. The method of claim 1, wherein the step of defining a distinct three-dimensional writing volume comprises:

defining a plane corresponding to an X-Y plane;
locating an origin (109, O) in space proximate the plane;
defining a Z-axis (108, Z) orthogonal to the X-Y plane; and
applying a font-centric reference coordinate system to define all points relative to one of the origin (109, O), the X-Y plane, the Z-axis (108, Z), and angular relations corresponding to a position of the writing tip (102, 309), by applying to the three dimensional writing volume one of Cartesian coordinates, spherical coordinates, and cylindrical coordinates.

3. The method of claim 1, wherein the step of measuring three-dimensional positions and motions of the writing tip (102, 309) comprises measuring changes in an electrical component over time as the writing tip (102, 309) traverses a three-dimensional path (201) with respect to a fixed position in space during a writing, the electrical component being one of voltage, current, resistance, inductance, and impedance.

4. The method of claim 1, wherein the step of identifying two dimensional symbols comprises:

determining font-centric measurement coordinates relative to a reader fulcrum pivot and an associated time coordinate;

aligning an X-Y plane adjacent a writing portion of a writing platform;

aligning a Z-axis (108, Z) with a ray pointing outward perpendicularly from the writing platform (301);

defining the origin (109, O) to be apart from the writing platform (301); and

projecting the three-dimensional position and motions onto a two-dimensional plane.

5. The method according to claim 1, wherein the step of identifying two-dimensional symbols comprises:

optically measuring the two-dimensional projection of motion over time along two orthogonal axes;

applying to one of the orthogonal axes of measure a first optical measuring device to measure radial motion; and

applying to the second of the orthogonal axes of measure a second optical measuring device to measure projected planar motion.

6. A device arranged to spatially read the handwriting of an arbitrary symbol in a font-centric coordinate system according to the method of claim 1, the device comprising:

a platform (301) having a flat surface; and
a spatial tracking assembly positioned adjacent to and rotatably engaging a planar writing area (302) selected from the flat surface of the platform (301), the spatial tracking assembly being configured to slidably accept a writing stylus (308) and to rotate with the stylus (308) at least about an axis parallel to the flat surface, the writing stylus (308) having a stylus tip (309), and the stylus tip (309) being adapted to trace a three dimensional path in a volume above the flat surface of the platform (301);

whereby the device is arranged to measure three-dimensional font-centric positions and motions (201) of the writing tip (102, 309) as the arbitrary symbol is being executed; and to identify two-dimensional symbols by forming, in said coordinate system, a two dimensional projected image (203) of the measured three-dimensional font-centric positions and motions (201) of the writing tip (102,309).

7. The device according to claim 6, wherein the spatial tracking assembly comprises:

an assembly support pinion (313) providing rotatable engagement with the flat surface of the platform (301);

a fulcrum housing having a fulcrum bracket (304) connected to the assembly support pinion (313);

a fulcrum pinion (312) rotatably engaging the fulcrum housing orthogonally to the assembly support pinion (313); and

a boom (320), comprising:

at least one elongated boom stem (305) attached at one end to the fulcrum pinion (312);

a tracking bracket (306) slidably attached to the at least one boom stem (305); and

an opening (307) on the tracking bracket (306), the opening (307) serving as a receptacle for engaging the boom (320) with the writing stylus (308), whereby three dimensional movement of the stylus tip (309) is translaced through movement of the tracking bracket (306) with respect to the at least one boom stem (305) into a two dimensional representation of a symbol; and

a securing means for rotatably securing the spatial tracking assembly to the flat surface of the platform (301), the securing means comprising:

a restricting flange on one end of the assembly support pinion (313);

a locking feature on another end of the assembly support pinion (313); and

a locking member (432) mating with the locking feature to lock the assembly support pinion (313) in the platform (301), whereby the spatial tracking assembly is adapted to rotate at least two dimensionally with respect to the flat surface of the platform (301).

**8.** The device according to claim 7, wherein the tracking bracket (306) comprises:

a reference tracking point fixed relative to the stylus receptacle (307);

a reference position of the tracking bracket (306) along the boom;

a reference position of the boom (320), wherein the tracking point lies within the writing volume and the tracking point and reference positions define a three-dimensional font-centric coordinate space in which the stylus tip (309) moves; and

means for measuring position, wherein position measurement comprises:

measurement of a linear position along the boom (320);

measurement of an angular position rendered by an angular position of the fulcrum pinion (312);

measurement of an angular position rendered by an angular position of the assembly support pinion (313), whereby time and position measurements are used to determine a dynamic state variable of the stylus tip (309) and position of the stylus tip (309) as a function of time; and

measurement of a radial position of the boom (320), whereby radial position measurements are used to determine a dynamic state variable of the stylus tip (309) and position of the stylus tip (309) as a function of time.

**9.** The device according to claim 8, wherein position measurements are collected as tracking data, the tracking data comprising:

output of a linear position sensor, the linear position corresponding to translation of the tracking bracket (306) along the at least one boom stem (305);

output of a first angular position sensor, the first angular position corresponding to an angle of the boom (320) with respect to a writing surface;

output of a second angular position sensor, the second angular position corresponding to an angle of the boom (320) with respect to a perpendicular axis related to the writing surface, whereby the tracking data is used to determine a dynamic state variable of the stylus tip (309) and a position of the stylus tip (309) as a function of time;

a set of time coordinates and a set of said position sensor outputs, wherein position sensor outputs are transformed to a spatially equivalent set of Cartesian coordinates;

a conical projection of the Cartesian coordinates onto the writing area;

a restriction of the conical projection, the restriction producing an image upon the writing area that is true to an image of a writing upon a traditional writing medium; and

an identification of the restriction with a projection pre-image in a writing volume of a true writing image, whereby three-dimensional writing motions formed within the writing volume are identified and interpreted as two-dimensional symbols in real time.

**10.** The method of claim 1, wherein the step of identifying two-dimensional symbols comprises:

determining writing tip true position measurements at measured times; by

setting the relaxation time for acquiring one physical position measurement to be the minimum time interval containing the true time of the observed measurement;

setting an appropriate indication of measurement accuracy and of position resolution, to be the minimum measurement position interval containing the true location of the writing tip (102, 309);

setting the three-dimension intersection of the one-dimension minimum measurement position intervals, to be the minimum three-dimensional position resolution volume element containing the writing tip (102, 309);

delegating the true position of the writing tip (102, 309) to be contained in the minimum volume element, at the true time of the observation of the writing tip (102, 309); and

deriving a dynamic state variable from writing tip true position measurements at their measured times; by

deriving a velocity of the writing tip (102, 309) by a difference of measured positions, and a difference of their derived times at an interpolated measured time;

deriving an acceleration of the writing tip (102, 309) by a difference of derived velocities, and a difference of their derived times at the interpolated time of the velocities;

deriving a tangent vector of the locus of the writing tip (102, 309) from the derived velocity;

deriving a normal vector of the locus of the writing tip (102, 309) by a difference of derived tangents, and a difference of their derived times at the interpolated time of the tangents;

deriving a binormal vector of the locus of the writing tip (102, 309) from the tangent and normal at their interpolated time;

deriving the curvature vector of the locus of the writing tip (102, 309) at an interpolated time;

deriving the torsion vector of the locus of the writing tip (102, 309) at an interpolated time;

projecting the derived dynamic state variables or motions at their designated times upon the designated X-Y plane.

## Patentansprüche

1. Verfahren zum räumlichen Lesen des Handschreibens eines beliebigen Symbols in einem Schriftart-zentrischen Koordinatensystem, wobei das Verfahren die Schritte umfasst von:

Definieren eines eindeutigen dreidimensionalen Schreibvolumens, das einem eindeutigen stationären Ursprung (109, O) eines Schriftart-zentrischen Messkoordinatensystems zugeordnet ist;

Ermöglichen einer passiven Messung einer wahren Position einer Schreibspitze (102, 309) im dreidimensionalen Schreibvolumen;

Einbringen einer Schreibspitze (102, 309) in das dreidimensionale Schreibvolumen, wobei das Einbringen das Einsetzen eines Schreibstifts (101, 308), der die Schreibspitze (102, 309) aufweist, in eine Aufnahme (307) in einer Klammer (306) umfasst, die an einem Ausleger (320) in einem Leser für handschriftliche Symbole angebracht ist;

Schreiben des beliebigen Symbols mit der Schreibspitze (102, 309) durch einen Benutzer, der einen Schreibstift (101, 308) hält, der die Schreibspitze (102, 309) aufweist, und der auf ein Schreibgebiet (302) des Lesers für handgeschriebene Symbole schreibt;

Messen von dreidimensionalen Schriftart-zentrischen Positionen und

Bewegungen (201) der Schreibspitze (102, 309) während das beliebige Symbol ausgeführt wird; und

Identifizieren von zweidimensionalen Symbolen durch Bilden eines zweidimensionalen Projektionsbilds (203) in dem Koordinatensystem aus den gemessenen dreidimensionalen Schriftart-zentrischen Positionen und Bewegungen (201) der Schreibspitze (102, 309).

2. Verfahren nach Anspruch 1, wobei der Schritt des Definierens eines bestimmten dreidimensionalen Schreibvolumens umfasst:

Definieren einer Ebene, die einer X-Y-Ebene entspricht;

Lokalisieren eines Ursprungs (109, O) im benachbart der Ebene befindlichen Raum;

Definieren einer Z-Achse (108, Z), die orthogonal auf der X-Y-Ebene steht; und

Anwenden eines Schriftart-zentrischen Referenzkoordinatensystems, um alle Punkte relativ zu einem aus dem Ursprung (109, O), der X-Y-Ebene, der Z-Achse (108, Z) und Winkelbeziehungen entsprechend einer Position der Schreibspitze (102, 309) zu definieren, durch Anwenden von kartesischen Koordinaten, sphärischen Koordinaten oder zylindrischen Koordinaten auf das dreidimensionale Schreibvolumen.

3. Verfahren nach Anspruch 1, wobei der Schritt des Messens von dreidimensionalen Positionen und Bewegungen der Schreibspitze (102, 309) umfasst: Messen von Änderungen in einer elektrischen Komponente über die Zeit, während die Schreibspitze (102, 309) einen dreidimensionalen Pfad (201) in Bezug auf ein feste Position im Raum während eines Schreibens durchläuft, wobei die elektrische Komponente eines aus einer Spannung, einem Strom, einem Widerstand, einer Induktivität und einer Impedanz ist.

**4.** Verfahren nach Anspruch 1, wobei der Schritt des Identifizierens eines zweidimensionalen Symbols umfasst:

Bestimmen von Schriftart-zentrischen Messkordinaten relativ zu einem Leserstützzapfen und einer zugeordneten Zeitkoordinate; Ausrichten einer X-Y-Ebene benachbart eines Schreibabschnitts einer Schreibplattform; Ausrichten einer Z-Achse (108, Z) mit einem Strahl, der senkrecht von der Schreibplattform (301) auswärts zeigt; Definieren des Ursprungs (109, O), so dass er sich außerhalb der Schreibplattform (301) befindet; und Projizieren der dreidimensionalen Position und Bewegungen auf eine zweidimensionale Ebene.

**5.** Verfahren nach Anspruch 1, wobei der Schritt des Identifizierens eines zweidimensionalen Symbols umfasst:

Optisches Messen der zweidimensionalen Projektion der Bewegung über die Zeit entlang zweier orthogonaler Achsen; Anwenden eines ersten optischen Messgerätes auf eine der orthogonalen Messachsen, um radiale Bewegung zu messen, und Anwenden eines zweiten optischen Messgerätes auf die zweite der orthogonalen Messachsen, um projizierte ebene Bewegung zu messen.

**6.** Vorrichtung zum räumlichen Lesen des Handschreibens eines beliebigen Symbols in einem Schriftart-zentrischen Koordinatensystem entsprechend dem Verfahren aus Anspruch 1, wobei die Vorrichtung umfasst:

eine Plattform (301), die eine ebene Fläche aufweist; und eine Anordnung zum räumlichen Verfolgen, die benachbart zu einem ebenen Schreibgebiet (302) und in dieses rotierbar eingreifend positioniert ist, das aus der ebene Fläche der Plattform (301) ausgewählt ist, wobei die Anordnung zum räumlichen Verfolgen konfiguriert ist, einen Schreibstift (308) gleitbar aufzunehmen und mit dem Stift (308) wenigstens um eine Achse parallel zur ebenen Fläche zu rotieren; wobei der Schreibstift (308) eine Stiftspitze (309) aufweist und die Stiftspitze (309) geeignet ist, einen dreidimensionalen Pfad in einem Volumen über der ebenen Fläche der Plattform (301) zu verfolgen; wobei die Vorrichtung angeordnet ist, um dreidimensionale Schriftartzentrische Positionen und Bewegungen (201) der Schreibspitze (102, 309) zu messen, wenn das beliebige Symbol ausgeführt wird; und um zweidimensionale Symbole zu identifizieren, durch Bilden eines zweidimensionalen Projektionsbilds (203) in dem Koordinatensystem aus den gemessenen dreidimensionalen Schriftart-zentrischen Positionen und Bewegungen (201) der Schreibspitze (102, 309).

**7.** Vorrichtung nach Anspruch 6, wobei die Anordnung zum räumlichen Verfolgen umfasst:

einen Anordnungsunterstützungszapfen (313), der rotierbaren Eingriff mit der ebenen Fläche der Plattform (301) bereitstellt; ein Stützgehäuse mit einer Stützklammer (304), die mit dem Anordnungsunterstützungszapfen (313) verbunden ist; einen Stützzapfen (312), der mit dem Stützgehäuse orthogonal zum Anordnungsunterstützungszapfen (313) rotierbar in Eingriff steht; und einen Ausleger (320), der umfasst:

wenigstens eine längliche Auslegerstange (305), die bei einem Ende an dem Stützzapfen (312) angebracht ist; eine Verfolgeklammer (306), die an der wenigstens einen Auslegerstange (305) gleitbar angebracht ist; und eine Öffnung (307) auf der Verfolgeklammer (306), wobei die Öffnung (307) als eine Aufnahme dient, um den Ausleger (320) mit dem Schreibstift (308) in Eingriff zu bringen, wodurch dreidimensionale Bewegung der Stiftspitze (309) durch Bewegung der Verfolgeklammer (306) in Bezug auf die wenigstens eine Auslegerstange (305) in eine zweidimensionale Darstellung eines Symbols übersetzt wird; und

ein Sicherungsmittel zum rotierbaren Sichern der Anordnung zum räumlichen Verfolgen an der ebenen Fläche der Plattform (301), wobei das Sicherungsmittel umfasst:

einen Begrenzungsflansch an einem Ende des Anordnungsunterstützungszapfens (313); eine Schließeinrichtung am anderen Ende des Anordnungsunterstützungszapfens (313); und ein Schließbauteil (432), das mit der Schließeinrichtung ineinander greift, um den Anordnungsunterstützungszapfen (313) in der Plattform (301) zu sichern; wodurch die Anordnung zum räumlichen Verfolgen geeignet ist, wenigstens zweidimensional in Bezug auf die ebene Fläche der Plattform (301) zu rotieren.

8. Vorrichtung nach Anspruch 7, wobei die Verfolgeklammer (306) umfasst:

einen Referenzverfolgepunkt, der relativ zu der Stiftaufnahme (307) fixiert ist; eine Referenzposition der Verfolgeklammer (306) entlang des Auslegers; eine Referenzposition des Auslegers (320), wobei der Verfolgepunkt innerhalb des Schreibvolumens liegt und der Verfolgepunkt und die Referenzpositionen einen dreidimensionalen Schriftart-zentrischen Koordinatenraum definieren, in dem sich die Stiftspitze (309) bewegt; und Mittel zum Messen von Position, wobei die Positionsmessung umfasst:

Messung einer linearen Position entlang des Auslegers (320); Messung einer Winkelposition, die durch eine Winkelposition des Stützzapfens (312) gemacht wird, Messung einer Winkelposition, die durch eine Winkelposition des Anordnungsunterstützungszapfen (313) gemacht wird, wobei Zeit-und Positionsmessungen verwendet werden, um eine dynamische Zustandsvariable der Stiftspitze (309) und eine Position der Stiftspitze (309) als eine Funktion der Zeit zu bestimmen; und Messung einer radialen Position des Auslegers (320), wobei radiale Positionsmessungen verwendet werden, um eine dynamische Zustandsvariable der Stiftspitze (309) und eine Position der Stiftspitze (309) als eine Funktion der Zeit zu bestimmen.

9. Vorrichtung nach Anspruch 8, wobei Positionsmessungen als Verfolgedaten gesammelt werden, wobei die Verfolgedaten umfassen:

eine Ausgabe eines Linearpositionssensors, wobei die lineare Position einer Translation der Verfolgeklammer (306) entlang der wenigstens einen Auslegerstange (305) entspricht; eine Ausgabe eines ersten Winkelpositionssensors, wobei die erste Winkelposition einem Winkel des Auslegers (320) in Bezug auf die Schreibfläche entspricht; eine Ausgabe eines zweiten Winkelpositionssensors, wobei die zweite Winkelposition einem Winkel des Auslegers (320) in Bezug auf eine bezüglich der Schreibfläche senkrechte Achse entspricht, wobei die Verfolgedaten verwendet werden, um eine dynamische Zustandsvariable der Stiftspitze (309) und eine Position der Stiftspitze (309) als eine Funktion der Zeit zu bestimmen; einen Satz von Zeitkoordinaten und einen Satz der Positionssensorausgaben, wobei die Positionssensorausgaben zu einem räumlich äquivalenten Satz von kartesischen Koordinaten umgewandelt werden; eine konische Projektion der kartesischen Koordinaten auf das Schreibgebiet; eine Einschränkung der konischen Projektion, wobei die Einschränkung ein Bild auf dem Schreibgebiet erzeugt, das einem Bild eines Schriftzugs auf einem traditionellen Schreibmedium getreu ist; und eine Identifikation der Einschränkung mit einem Projektionspräbild in einem Schreibvolumen eines wahren Schreibbilds, wobei dreidimensionale Schreibbewegungen, die innerhalb des Schreibvolumens gebildet sind, als zweidimensionale Symbole in Echtzeit identifiziert und interpretiert werden.

10. Verfahren nach Anspruch 1, wobei der Schritt des Identifizierens zweidimensionaler Symbole umfasst:

Bestimmen von Messungen einer wahren Position der Schreibspitze bei gemessenen Zeiten; durch Einstellen der Relaxationszeit zum Aufnehmen einer Messung einer physischen Position auf das Minimalzeitintervall, das die wahre Zeit der beobachteten Messung enthält; Einstellen einer angemessenen Anzeige von Messgenauigkeit und Positionsauflösung auf ein Minimalmesspositionsintervall, das den wahren Ort der Schreibspitze (102, 309) enthält; Einstellen der dreidimensionalen Überschneidung der eindimensionalen Minimalmesspositionsintervale auf das dreidimensionale Minimalpositionsauflösungsvolumenelement, das die Schreibspitze (102, 309) enthält; Übertragen der wahren Position der Schreibspitze (102, 309), so dass sie im Minimalvolumenelement enthalten ist, bei der wahren Zeit der Beobachtung der Schreibspitze (102, 309); und Ableiten einer dynamischen Zustandsvariable aus den Messungen der wahren Positionen der Schreibspitze bei ihren gemessenen Zeiten, durch Ableiten einer Geschwindigkeit der Schreibspitze (102, 309) mittels einer Differenz der gemessenen Positionen und einer Differenz ihrer abgeleiteten Zeiten bei einer interpolierten gemessenen Zeit;

Ableiten einer Beschleunigung der Schreibspitze (102, 309) mittels einer Differenz der abgeleiteten Geschwindigkeiten und einer Differenz ihrer abgeleiteten Zeiten bei der interpolierten Zeit der Geschwindigkeiten;

Ableiten eines Tangentialvektors des Orts der Schreibspitze (102, 309) aus der abgeleiteten Geschwindigkeit;

Ableiten eines Normalenvektors des Orts der Schreibspitze (102, 309) mittels einer Differenz der abgeleiteten Tangenten und einer Differenz ihrer abgeleiteten Zeiten bei der interpolierten Zeit der Tangenten;

Ableiten eines Binormalenvektors des Orts der Schreibspitze (102, 309) aus der Tangente und der Normale bei ihrer interpolierten Zeit; Ableiten des Krümmungsvektors des Orts der Schreibspitze (102, 309) bei einer interpolierten Zeit;

Ableiten des Torsionsvektors des Orts der Schreibspitze (102, 309) bei einer interpolierten Zeit;

Projizieren der abgeleiteten dynamischen Zustandsvariablen oder der Bewegungen bei ihren bestimmten Zeiten auf die bestimmte X-Y-Ebene.

## Revendications

1. Procédé pour la lecture spatiale de l'écriture manuscrite d'un symbole arbitraire dans un système de coordonnées centré sur police, le procédé comprenant les étapes qui consistent :

   à définir un volume d'écriture tridimensionnel distinct associé à une origine fixe distincte (109, O) d'un système de coordonnées de mesures centré sur police ;
   à permettre une mesure passive d'une position réelle d'une pointe d'écriture (102, 309) dans le volume d'écriture tridimensionnel ;
   à déployer une pointe d'écriture (102, 309) dans le volume d'écriture tridimensionnel, le déploiement comprenant l'insertion d'un stylet d'écriture (101, 308) ayant la pointe d'écriture (102, 309) dans un réceptacle (307) dans une monture (306) montée sur une flèche (320) dans un lecteur de symboles manuscrits ;
   à amener un utilisateur à tracer le symbole arbitraire à l'aide de la pointe d'écriture (102, 309) en saisissant un stylet d'écriture (101, 308) ayant la pointe d'écriture (102, 309) et effectuant une écriture sur une zone d'écriture (302) du lecteur de symboles manuscrits ;
   à mesurer des positions et mouvements (201) centrés sur police à trois dimensions de la pointe d'écriture (102, 309) pendant l'exécution du symbole arbitraire ; et
   à identifier des symboles à deux dimensions en formant, dans le système de coordonnées, une image projetée (203) à deux dimensions des positions et mouvements (201) centrés sur police à trois dimensions mesurés de la pointe d'écriture (102, 309).

2. Procédé selon la revendication 1, dans lequel l'étape de définition d'un volume d'écriture distinct à trois dimensions comprend :

   la définition d'un plan correspondant à un plan X-Y ;
   la localisation d'une origine (109, O) dans un espace proche du plan ;
   la définition d'un axe Z (108, Z) orthogonal au plan X-Y ; et
   l'application d'un système de coordonnées de référence centré sur police pour définir tous les points par rapport à l'un de l'origine (109, O), du plan X-Y, de l'axe Z (108, Z), et de relations angulaires correspondant à une position de la pointe d'écriture (102, 309), en appliquant au volume d'écriture à trois dimensions l'une de coordonnées cartésiennes, de coordonnées sphériques et de coordonnées cylindriques.

3. Procédé selon la revendication 1, dans lequel l'étape de mesure de positions et mouvements dans trois dimensions de la pointe d'écriture (102, 309) comprend une mesure de variation d'une composante électrique au fil du temps pendant que la pointe d'écriture (102, 309) parcourt un trajet (201) à trois dimensions par rapport à une position fixe dans un espace pendant une écriture, la composante électrique étant l'une d'une tension, d'un courant, d'une résistance, d'une inductance et d'une impédance.

4. Procédé selon la revendication 1, dans lequel l'étape d'identification de symboles à deux dimensions comprend :

   la détermination de coordonnées de mesures centrées sur police par rapport à un point d'appui du lecteur et d'une valeur de coordonnée temporelle associée ;
   l'alignement d'un plan X-Y adjacent à une partie d'écriture d'une plate-forme d'écriture ;
   l'alignement d'un axe Z (108, Z) avec un rayon pointant vers l'extérieur perpendiculairement depuis la plate-forme d'écriture (301) ;
   la définition de l'origine (109, O) de manière qu'elle soit écartée de la plate-forme d'écriture (301) ; et
   la projection de la position et des mouvements dans trois dimensions sur un plan à deux dimensions.

**5.** Procédé selon la revendication 1, dans lequel l'étape d'identification de symboles à deux dimensions comprend :

la mesure optique de la projection à deux dimensions d'un mouvement dans le temps le long de deux axes orthogonaux ;

l'application à l'un des axes orthogonaux de mesure d'un premier dispositif de mesure optique pour mesurer un mouvement radial ;

l'application au second des axes orthogonaux de mesure d'un second dispositif de mesure optique pour mesurer un mouvement plan projeté.

**6.** Dispositif agencé pour lire spatialement l'écriture manuscrite d'un symbole arbitraire dans un système de coordonnées centré sur police selon le procédé de la revendication 1, le dispositif comportant :

une plate-forme (301) ayant une surface plate ; et

un ensemble de suivi spatial positionné de façon à être adjacent à, et à engager en rotation, une zone plane d'écriture (302) choisie dans la surface plate de la plate-forme (301), l'ensemble de suivi spatial étant configuré pour recevoir de façon glissante un stylet d'écriture (308) et pour tourner avec le stylet (308) au moins autour d'un axe parallèle à la surface plate, le stylet d'écriture (308) ayant une pointe de stylet (309), et la pointe de stylet (309) étant conçue pour suivre un trajet à trois dimensions dans un volume au-dessus de la surface plate de la plate-forme (301) ;

grâce à quoi le dispositif est agencé pour mesurer des positions et mouvements (201) centrés sur police, dans trois dimensions, de la pointe d'écriture (102, 309) pendant l'exécution du symbole arbitraire ; et pour identifier des symboles à deux dimensions en formant, dans ledit système de coordonnées, une image projetée (203) à deux dimensions des positions et mouvements mesurés (201) centrés sur police dans trois dimensions de la pointe d'écriture (102, 309).

**7.** Dispositif selon la revendication 6, dans lequel l'ensemble de suivi spatial comprend :

un pignon (313) de support de l'ensemble réalisant un engagement en rotation avec la surface plate de la plate-forme (301) ;

un boîtier d'appui ayant un support d'appui (304) lié au pignon (313) de support de l'ensemble ;

un pignon d'appui (312) engageant en rotation le boîtier d'appui orthogonalement au pignon (313) de support de l'ensemble ; et

une flèche (320), comportant :

au moins une tige de flèche allongée (305) attachée par une extrémité au pignon d'appui (312) ;

une monture de suivi (306) reliée de façon coulissante à la, au moins une, tige de flèche (305) ;

une ouverture (307) dans la monture de suivi (306), l'ouverture (307) servant de réceptacle pour engager la flèche (320) avec le stylet d'écriture (308), grâce à quoi un mouvement dans trois dimensions de la pointe de stylet (309) est transformé, par un mouvement de la monture de suivi (306) par rapport à la, au moins une, tige de flèche (305), en une représentation à deux dimensions d'un symbole ; et

un moyen d'assujettissement destiné à assujettir en rotation l'ensemble de suivi spatial à la surface plate de la plate-forme (301), le moyen d'assujettissement comportant :

une bride de retenue sur une extrémité du pignon (313) de support de l'ensemble ;

une conformation de blocage sur une autre extrémité du pignon (313) de support de l'ensemble ; et

un élément de blocage (432) s'accouplant avec la conformation de blocage pour bloquer le pignon (313) de support de l'ensemble dans la plate-forme (301), grâce à quoi l'ensemble de suivi spatial est rendu apte à tourner dans au moins deux dimensions par rapport à la surface plate de la plate-forme (301).

**8.** Dispositif selon la revendication 7, dans lequel la monture de suivi (306) comporte :

un point de suivi de référence qui est fixe par rapport au réceptacle (307) du stylet ;

une position de référence de la monture de suivi (306) le long de la flèche ;

une position de référence de la flèche (320), le point de suivi s'étendant dans le volume d'écriture et le point de suivi et les positions de référence définissant un espace à coordonnées centrées sur police, à trois dimensions, dans lequel la pointe de stylet (309) se déplace ; et

un moyen pour mesurer une position, dans lequel une mesure de position comprend :

une mesure d'une position linéaire le long de la flèche (320) ;

une mesure d'une position angulaire rendue par une position angulaire du pignon d'appui (312) ;

une mesure d'une position angulaire rendue par une position angulaire du pignon (313) de support de l'ensemble, grâce à quoi des mesures de temps et de position sont utilisées pour déterminer une variable d'état dynamique de la pointe (309) de stylet et une position de la pointe (309) du stylet en fonction du temps ;

une mesure d'une position radiale de la flèche (320), grâce à quoi des mesures de position radiale sont utilisées pour déterminer une variable d'état dynamique de la pointe (309) du stylet et une position de la pointe (309) du stylet en fonction du temps.

9. Dispositif selon la revendication 8, dans lequel des mesures de position sont collectées en tant que données de suivi, les données de suivi comprenant :

un signal de sortie d'un capteur de position linéaire, la position linéaire correspondant à une translation de la monture de suivi (306) le long de la, au moins une, tige de flèche (305) ;

un signal de sortie d'un capteur d'une première position angulaire, la première position angulaire correspondant à un angle de la flèche (320) par rapport à une surface d'écriture ;

un signal de sortie d'un capteur de seconde position angulaire, la seconde position angulaire correspondant à un angle de la flèche (320) par rapport à un axe perpendiculaire associé à la surface d'écriture, grâce à quoi les données de suivi sont utilisées pour déterminer une variable d'état dynamique de la pointe (309) du stylet et une position de la pointe (309) du stylet en fonction du temps ;

un jeu de coordonnées temporelles et un jeu desdits signaux de sortie des capteurs de position, les signaux de sortie des capteurs de position étant transformés en un jeu spatialement équivalent de coordonnées cartésiennes ;

une projection conique des coordonnées cartésiennes sur la zone d'écriture ;

une restriction de la projection conique, restriction produisant sur la zone d'écriture une image qui est authentique d'une image d'une écriture sur un support d'écriture traditionnel ; et

une identification de la restriction avec une pré-image de projection dans un volume d'écriture d'une image d'écriture réelle, grâce à quoi des mouvements d'écriture dans trois dimensions formés dans le volume d'écriture sont identifiés et interprétés en tant que symboles à deux dimensions en temps réel.

10. Procédé selon la revendication 1, dans lequel l'étape d'identification de symboles à deux dimensions comprend :

le fait de déterminer des mesures de position réelle de la pointe d'écriture à des temps mesurés ; en

établissant le temps de relaxation pour acquérir une mesure de position physique comme étant l'intervalle de temps minimal contenant le temps réel de la mesure observée ;

établissant une indication appropriée de la précision de la mesure et de la résolution de la position, comme étant l'intervalle de position de mesure minimale contenant l'emplacement réel de la pointe d'écriture (102, 309) ;

établissant l'intersection en trois dimensions des intervalles de position de mesure minimale à une dimension, comme étant l'élément de volume de résolution de position minimale à trois dimensions contenant la pointe d'écriture (102, 309) ;

déléguant la position réelle de la pointe d'écriture (102, 309) comme étant contenue dans l'élément de volume minimal, au temps réel de l'observation de la pointe d'écriture (102, 309) ; et

la dérivation d'une variable d'état dynamique d'après les mesures de position réelle de la pointe d'écriture à leurs temps mesurés ; en

dérivant une vitesse de la pointe d'écriture (102, 309) par une différence de positions mesurées, et une différence de leurs temps dérivés à un temps mesuré interpolé ;

dérivant une accélération de la pointe d'écriture (102, 309) par une différence de vitesses dérivées, et une différence de leurs temps dérivés au temps interpolé des vitesses ;

dérivant un vecteur tangente du lieu géométrique de la pointe d'écriture (102, 309) depuis la vitesse dérivée ;

dérivant un vecteur normal du lieu géométrique de la pointe d'écriture (102, 309) par une différence de tangentes dérivées, et une différence de leurs temps dérivés au temps interpolé des tangentes ;

dérivant un vecteur binormal du lieu géométrique de la pointe d'écriture (102, 309) d'après la tangente et la normale à leur temps interpolé ;

dérivant le vecteur courbure du lieu géométrique de la pointe d'écriture (102, 309) au temps interpolé ;

dérivant le vecteur torsion du lieu géométrique de la pointe d'écriture (102, 309) au temps interpolé ;

projetant les variables d'état dynamique dérivées ou les mouvements à leurs temps désignés sur le plan X-Y désigné.

Figure 1.

# Figure 2.

# Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9521436 A
- WO 9926191 A
- US 5576727 A
- US 2003179201 A
- US 6229102 B
- US 6081261 A
- WO 2004029866 A